# EUROPEAN PATENT SPECIFICATION

(11) **EP 4 645 949 B1**
(45) Date of publication and mention of the grant of the patent: **02.12.2026**
(21) Application number: 24173595.0
(22) Date of filing: 30.04.2024
(51) Int. Cl.: H04W 28/22, H04W 72/51

(54) **A METHOD FOR FAIRLY, EFFICIENTLY AND SUFFICIENTLY SCHEDULING DATA PACKETS TRANSMITTED BY A DISTRIBUTED REAL-TIME APPLICATION**
VERFAHREN ZUR FAIREN, EFFIZIENTEN UND AUSREICHENDEN PLANUNG VON DATENPAKETEN, DIE VON EINER VERTEILTEN ECHTZEITANWENDUNG ÜBERTRAGEN WERDEN
PROCEDE PERMETTANT DE PROGRAMMER DE MANIERE EQUITABLE, EFFICACE ET SUFFISAMMENT DES PAQUETS DE DONNEES TRANSMIS PAR UNE APPLICATION EN TEMPS REEL DISTRIBUEE

(43) Date of publication of application: 05.11.2025
(73) Proprietor: Deutsche Telekom AG, 53113 Bonn (DE)
(72) Inventor: SCHNIEDERS, Dominik, 52078 Aachen (DE)
(74) Representative: RDL Patentanwälte PartG mbB

(56) References cited:
- EP-A1- 4 072 042
- WO-A1-2023/088557

## Description

The invention relates to a method for operating a scheduler of an access point of a radio access network, RAN, wherein a scheduler of a RAN allocates spectral resources to a wireless connection provided by the access point and forwards data packets transmitted by a distributed real-time application via the wireless connection and the distributed real-time application dynamically adjusts a data rate of the transmitted data packets below a target bitrate, the target bitrate being signaled to the distributed real-time application by the scheduler, the target bitrate being determined by the scheduler as an output bitrate of a virtual queue defined by the scheduler. The invention further relates to an access point for a RAN and a computer program product.

Methods for operating a scheduler of an access point of a RAN, i.e., scheduling methods, are known in the state of the art and used for controlling queues of the access point, the queues being related to wireless connections provided by the access point. Each data packet to be transmitted via a wireless connection has to pass a queue of the access point before being transmitted.

The scheduler controls the queues of the access point and allocates spectral resources, i.e., resource blocks, RB, or time slots to the wireless connections and, as a consequence, allows the data packets for passing the queues. Assigning spectral resources is generally referred to as scheduling. The more spectral resources are allocated to a wireless connection, the higher is a bitrate of the respective wireless connection. The bitrate is a property of the wireless connection.

A distributed real-time application is an application having a sender and a receiver arranged at a distance from the sender. The sender is configured for transmitting data packets via a wireless connection to the receiver and the receiver is configured for receiving the transmitted data packets. The rate and sizes of the transmitted data packets yield a data rate of the distributed real-time application. The data rate is a property of the distributed real-time application.

The distributed real-time application requires the receiver to almost immediately react to the sender. Thus, the distributed real-time application requires a transmission time and a variation of the transmission time of the data packets to be as small as possible. In other words, a proper function of the distributed real-time application is very time-critical. The transmission time caused by the wireless connection is generally referred to as a latency. The variation of the latency is generally referred to as a jitter. The distributed real-time application, hence, requires both a low latency and a low jitter of the wireless connection for the proper function.

WO 2023/088557 A1 discloses a method for operating a scheduler of an access point of a RAN which is based on a dedicated L4S bearer provided by the access point and having a higher priority than an MBB bearer, detecting any distributed application using the dedicated L4S bearer not being compliant with the L4S policy, and taking adequate measures in order to restrict each detected non-compliant distributed application.

EP 4 072 042 A1 discloses a method for synchronizing a frontend of a distributed application and a backend of the distributed application, wherein the synchronization is based on calculating a difference between corresponding timestamps of respective clocks of a terminal device executing the frontend and a server executing the backend and using the calculated difference for synchronization.

US 2016/156563 A1 discloses a method for enforcing a determined data rate of a distributed real-time application, wherein the data rate is determined to be a target bitrate dependent on a measured load of a radio cell of a RAN. The target bitrate is signaled to the distributed real-time application.

When a plurality of applications compete for spectral resources provided by the access point the scheduler aims, at the same time, at fairly distributing the spectral resources among the competing applications, at allocating all available spectral resources to the respective wireless connections of the competing applications, i.e., achieving a 100% utilization of the available spectral resources, and at allocating possibly to each wireless connection spectral resources sufficient for a proper function of the respective distributed application. However, known scheduling methods fall short of at least one aim, particularly in case data packets of distributed real-time applications are to be scheduled.

The invention is defined by the independent claims. Further advantageous embodiments are defined in the dependent claims.

It is an object of the invention to suggest a method for operating a scheduler of an access point of a RAN which allows for fairly, efficiently and sufficiently scheduling data packets transmitted by a distributed real-time application. Other objects of the invention are to provide an access point for a RAN and to provide a computer program product.

A first aspect of the invention is a method for operating a scheduler of an access point of a radio access network, RAN, wherein a scheduler of an access point of a radio access network, RAN, allocates spectral resources to a wireless connection provided by the access point and forwards data packets transmitted by a distributed real-time application via the wireless connection provided by the access point and the distributed real-time application dynamically adjusts a data rate of the transmitted data packets below a target bitrate signaled to the distributed real-time application by the scheduler, the target bitrate being determined by the scheduler as an output bitrate of a virtual queue defined by the scheduler. The virtual queue is different from a real queue of the wireless connection but is equally defined by a size and the output bitrate, i.e., the signaled target bitrate, as parameters. Different from the real queue, the scheduler may adjust the parameters of the virtual queue to dynamically deviate from the real queue.

The distributed real-time application is responsive to the signaled target bitrate, i.e., configured for dynamically adjusting the data rate depending on the signaled target bitrate. Thus, the distributed-real-time application adapts to varying spectral resources allocated to the wireless connection by the scheduler and varying bitrates of the wireless connections, respectively. Due to the cooperation of the scheduler and the distributed real-time application a queue overflow can be avoided or at least occurs relatively seldom which results in a lower latency and a lower jitter as compared with no cooperation of the scheduler and the distributed real-time application. Any such cooperation effectively manages a latency of the wireless connection.

The distributed real-time application adjusts the data rate below the signaled target bitrate, i.e., does not fully use the signaled target bitrate. The difference allows the distributed real-time application for adequately reacting to the signaled target bitrate accidentally dropping without causing an overflow of the virtual queue.

The scheduler preferably allocates more spectral resources to the wireless connection than fair spectral resources, determines the target bitrate at an offset above a best effort bitrate, the best effort bitrate being determined dependent on the fair allocation of spectral resources and on radio conditions of the wireless connection. The scheduler may determine the fair allocation of the spectral resources by equally distributing the totally available spectral resources among all simultaneous wireless connections provided by the access point. The offset compensates for the data rate being adjusted below the signaled target bitrate of the wireless connection and allows the scheduler for having the data rate adjusted higher than the determined best effort bitrate would have been signaled instead.

According to the invention, the scheduler measures a time average of a deviation of the adjusted data rate from the determined best effort bitrate and dynamically adjusts the offset dependent on the measured time-averaged deviation. The best effort bitrate which may also be referred to as a fair bitrate corresponds to a bitrate of the wireless connection which does not adversely affect further wireless connections simultaneously provided by the access point. The totally available spectral resources of the access point correspond to a link capacity of the access point. According to the invention, the time-averaged deviation *δ* is measured by integrating a difference of the adjusted data rate from the determined best effort bitrate over a predetermined time interval T: $δ = \frac{1}{T} ∗ \int \left({datarate}_{app}\left(t\right)-{bitrate}_{besteffort}\left(t\right)\right) dt$

Averaging the deviation over the predetermined time interval ensures the data rate to be adjusted substantially equaling the determined best effort bitrate. Short term deviations from the best effort bitrate are tolerated. Positive deviations compensate negative deviations resulting in a 100% utilization of the best effort bitrate, i.e., a fair link capacity of the wireless connection is fully used by the distributed real-time application without disadvantaging further simultaneous wireless connections provided by the access point. The predetermined time interval is chosen sufficiently long for preventing the usual dynamic behavior of the best effort bitrate from substantially affecting the averaged deviation. The dynamic behavior of the best effort bitrate may result from a varying number of simultaneous wireless connections provided by the access point or from varying radio conditions, e.g. caused by the moving sender or receiver of the distributed real-time application in a radio cell created by the access point.

Preferably, the scheduler gradually reduces the measured time-averaged deviation at least substantially to zero by increasing the offset when the measured time-averaged deviation is negative, and by decreasing the offset when the time-averaged deviation is positive. A negative time-averaged deviation indicates the data rate being lower than the best effort bitrate while a positive time-averaged deviation indicates the data rate being higher than the best effort bitrate. For removing an accidental deviation, the scheduler varies the offset and, hence, the signaled target bitrate. The offset is varied smoothly without a step as the distributing real-time application also adjusts the data rate smoothly without a step and inevitably reacts with a delay.

The scheduler may adjust the offset faster for a measured time-averaged deviation being absolutely higher and slower for a measured time-averaged deviation being absolutely lower. As usual, the term "absolutely" means ignoring a sign of the deviation. The adjustment is the stronger the more the data rate deviates from zero. In other words, the scheduler handles small deviations from zero more permissively and large deviations from zero more strictly. As a result, larger deviations are reduced in shorter time while smaller deviations are reduced in longer time. Each large deviation strongly disadvantages further wireless connections provided by the access point. In contrast each small deviation weakly disadvantages further wireless connections provided by the access point.

The scheduler advantageously measures the time-averaged deviation periodically and/or for predetermined finite time intervals. The measurement of the time-averaged deviation is multiply, particularly regularly repeated during the wireless connection. The finite time intervals may be determined to have a constant length or a variable length. A distance between start points of successive time intervals may be larger than a length of a time interval.

In an embodiment, the scheduler assigns a priority to the transmitted data packets, allocates spectral resources to the wireless connection corresponding to the assigned priority, determines a priority bitrate dependent on the allocated spectral resources and on radio conditions of the wireless connection and an initial offset when the distributed real-time application starts, the initial offset being calculated as a percentage of an excess of the determined priority bitrate over the determined best effort bitrate to result in an initially negative time-averaged deviation. When the distributed real-time application starts, the scheduler cannot yet have measured the time-averaged deviation. Instead, the scheduler guesses a reasonable offset causing the signaled target bitrate to be between the determined best effort bitrate and the determined priority bitrate. Favorably, the scheduler determines the initial offset to be in a range from 5% to 10% of the excess of the determined priority bitrate over the determined best effort bitrate. This guess takes into account that usual distributed real-time applications adjust the data rate approximately 10% lower than the signaled target bitrate.

The scheduler may assign an absolute priority or a relative priority to the transmitted data packets. The absolute priority causes the transmitted data packets to precede any data packets transmitted via different simultaneous wireless connections. Alternatively, the relative priority may depend on the fair allocation of the spectral resources. The priority bitrate may particularly be determined allocating twice the fair spectral resources. The distributed real-time application is virtually treated as two identical distributed real-time applications using the wireless connection. In case a plurality of wireless connections is simultaneously provided by the access point, the further wireless connections are not substantially disadvantaged by the assigned relative priority.

In an alternative embodiment, the scheduler determines an initial offset to be a stored averaged offset associated with the distributed real-time application when the distributed real-time application starts. The associated stored averaged offset allows the scheduler for adequately adjusting the target bitrate from the start of the distributed real-time application without guessing.

Favorably, the distributed real-time application transmits a functional minimum data rate of the distributed real-time application to the scheduler and the scheduler determines the target bitrate to be at least the transmitted functional minimum data rate increased by the offset. The distributed real-time application defines the functional minimum data rate to be a data rate allowing just a minimum function of the distributed real-time application. The distributed real-time application does not function at data rates below the functional minimum data rate. The distributed real-time application may provide an application programming interface, API, to be connected to by the scheduler, the functional minimum data rate being transmitted via the API. The scheduler prevents the data rate to be adjusted below the functional minimum data rate. While the scheduler maintains the distributed real-time application functional by doing so, the scheduler eventually disadvantages further wireless connections.

The scheduler may determine the bitrate to be at least the transmitted functional minimum data rate increased by the offset temporarily only for a tolerance time interval. Accordingly, the further wireless connections are never disadvantaged for long. However, the time interval may be chosen to be sufficiently long for bypassing a short dip of the best effort bitrate.

The target bitrate is preferably signaled indirectly by applying a low latency low loss scalable throughput, L4S, algorithm to the virtual queue. The L4S algorithm is specified by RFC 9330 and uses an explicit congestion notification, ECN, protocol exploiting bits of an internet protocol, IP, header of the data packets for signaling a filling level of the virtual queue. For instance, the sender of the distributed real-time application transmits the data packets via the wireless connection at a data rate. The scheduler provides a percentage of the transmitted data packets with a mark, the percentage indicating the filling level of the virtual queue. The receiver of the distributed real-time application receives the transmitted data packets, measures the percentage of received marked data packets and causes the sender to reduce the data rate until no more marked data packets are received.

Alternatively the target bitrate may be signaled directly via an application programming interface, API, of the distributed real-time application.

The scheduler may store each offset for a storing time, calculate an average of the stored offsets and adjust the offset faster when a deviation of a current offset from the averaged offset is smaller and adjust the offset slower when a deviation of a current offset from the averaged offset is bigger. The averaged offset may be considered as a typical offset associated with the distributed real-time application and reflects how much below the distributed real-time application usually adjusts the data rate below the signaled target bitrate. The absolutely larger is the deviation of the current offset from the stored averaged offset the stronger is the adjustment of the offset. In other words, the scheduler handles small deviations more permissively and large deviations more strictly. Large deviations correspond to an unusual behavior of the distributed real-time application in adjusting the data rate.

In a preferred embodiment, the scheduler allocates spectral resources allocated to the wireless connection but not used by the distributed real-time application to a different wireless connection provided by the access point. The excess bitrate may be referred to as a virtual headroom which is generally not used by the distributed real-time application. The virtual head room is mainly used for allowing the distributed real-time application for a transient response and temporarily ensuring the functional minimum data rate. Assigning the allocated but not used spectral resources to the different wireless connection minimizes a disadvantage of the different wireless connection, i.e., each further simultaneous wireless connection and, at the same time, ensures a 100% utilization of the total link capacity of the access point.

Another object of the invention is an access point for a radio access network, RAN, comprising a computing device. The computing device of the access point is configured for creating a radio cell surrounding an antenna connected to the access point.

According to the invention, the access point is configured for carrying out a method according to an embodiment of the invention as the scheduler. The access point comprises a scheduler configured for fairly, efficiently and sufficiently scheduling data packets transmitted by a distributed real-time application via a wireless connection provided by the access point. The access point may be configured as a base transceiver station, BTS, of a cellular network or as a wide area local network, WLAN, access point of a WLAN.

A third object of the invention is a computer program product, comprising a digital storage medium storing a program code. The digital storage medium comprises a compact disk, CD, a digital versatile disk, DVD, a hard disk, HD, a random access memory, RAM, chip, a universal serial bus, USB, stick, a cloud storage and the like.

According to the invention, the program code causes a computing device to carry out a method according to an embodiment of the invention as the scheduler when being executed by a processor of the computing device. The computing device implements a scheduler of an access point of a RAN. The scheduler is configured for fairly, efficiently and sufficiently scheduling data packets transmitted by a distributed real-time application via a wireless connection provided by the access point.

It is an essential advantage of the inventive method that data packets transmitted via a wireless connection provided by an access point of a RAN are scheduled fairly, efficiently and sufficiently. A distributed real-time application is ensured to function properly while not disadvantaging further wireless connections simultaneously provided by the access point. At the same time, the link capacity of the access point is fully used.

It shall be understood that the features described previously and to be described subsequently may be used not only in the indicated combinations but also in different combinations or on their own without leaving the scope of the present invention.

The invention is described in detail by means of exemplary embodiments and with reference to the drawings. Like components are indicated by like reference numerals throughout the drawings.
- Fig. 1: schematically shows a radio access network, RAN, comprising a scheduler according to an embodiment of the invention;
- Fig. 2: schematically shows a graph displaying a time behavior of relevant rates and a latency of a wireless connection controlled by the scheduler shown in fig. 1 operated in a method according to a first embodiment of the invention;
- Fig. 3: schematically shows a graph displaying a time behavior of relevant rates and a latency of a wireless connection controlled by the scheduler shown in fig. 1 operated in a method according to a second embodiment of the invention.

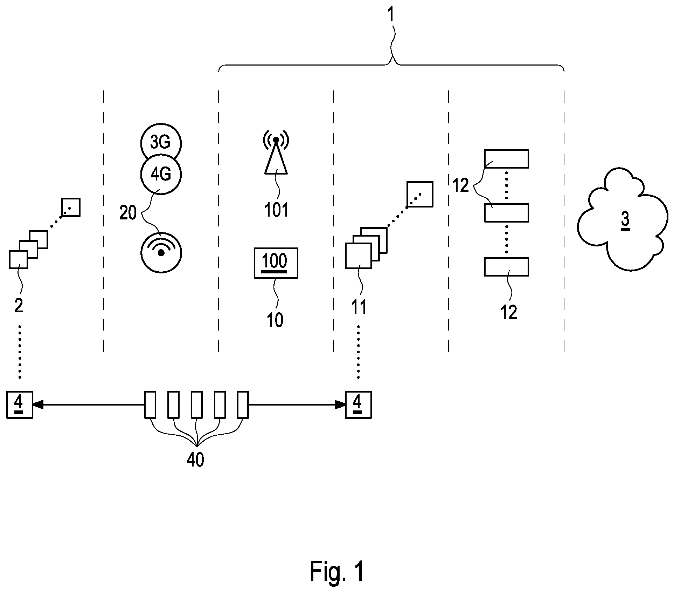

Fig. 1 schematically shows a radio access network, RAN, 1 comprising a scheduler 100 according to an embodiment of the invention. The radio access network 1 comprises at least one access point 10 and an antenna 101 connected to the access point 10, generally a plurality of access points with respective connected antennas. Exemplarily, the radio access network 1 is configured as a cellular network, and the at least one access point 10 is configured as a base transceiver station, BTS. Alternatively, the radio access network 1 may be configured as a wide local area network, WLAN, and the at least one access point 10 may be a WLAN access point.

The radio access network 1 may further comprise an edge data center 11 adjacent and connected to the at least one access point 10 and a backbone 12 the edge data center 11 is connected to. An internet 3 may be connected to the backbone 12.

At least one terminal device 2, e.g., a smartphone, a tablet, a notebook and the like, generally a plurality of terminal devices 2, may be connected to the at least one access point 10 via a wireless connection 20 provided by the at least one access point 10. The terminal device 2 may comprise a sender of a distributed real-time application 4. The edge data center 11 may comprise a receiver of the distributed real time application 4. Alternatively, the terminal device 2 may comprise the receiver of the distributed real-time application 4, and the edge data center 11 may comprise the sender of the distributed real-time application 4. The sender of the distributed real-time application is configured for transmitting data packets 40 via the wireless connection 20 to the receiver of the distributed real-time application 4.

The at least one access point 10 comprises the scheduler 100. More precisely, the at least one access point 10 comprises a computing device configured for carrying out a method according to an embodiment of the invention as the scheduler 100. The computing device may be configured by means of a computer program product comprising a digital storage medium storing a program code. The program code causes a computing device to carry out the inventive method as the scheduler 100 when being executed by a processor of the computing device.

The scheduler 100 of the access point 10 of the radio access network, RAN, 1 carries out the following method when being operated.

The scheduler 100 of the access point 10 of the radio access network, RAN, 1 allocates spectral resources to the wireless connection 20 provided by the access point 10 and forwards data packets 40 transmitted by the distributed real-time application 4 via the wireless connection 20. Exemplarily, a base transceiver station, BTS, of a cellular network as the RAN 1 provides the wireless connection 20 as the access point 10.

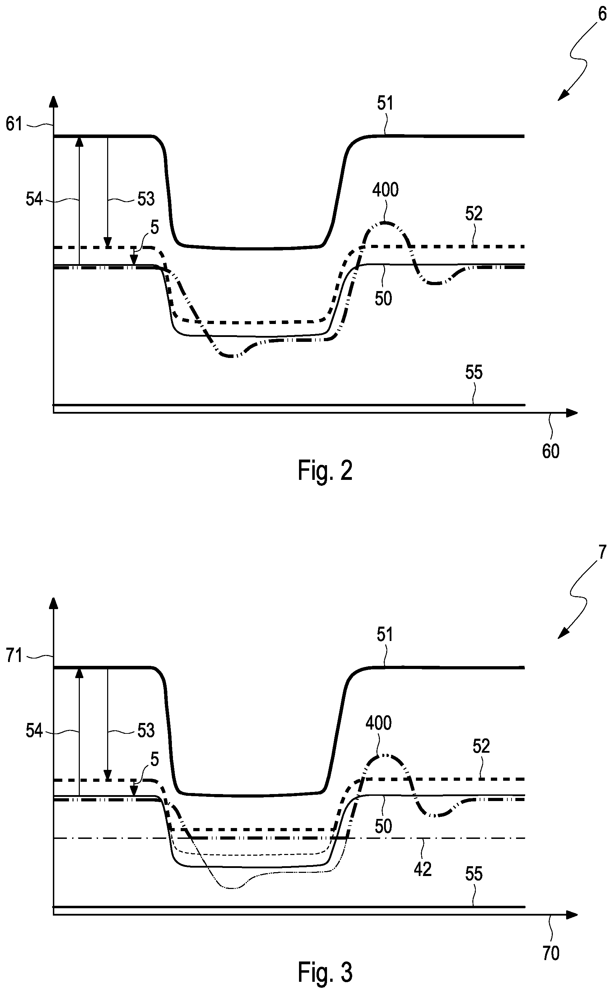

Fig. 2 schematically shows a graph 6 displaying a time behavior of relevant rates, i.e., a data rate 400 of the distributed real-time application 4 and bitrates 50, 51, 52 of the wireless connection 20, and a latency 55 of the wireless connection 20 controlled by the scheduler 100 shown in fig. 1 carrying out a method according to a first embodiment of the invention. An abscissa 60 of the graph 6 indicates a time in seconds. An ordinate 61 of the graph 6 indicates values of both the relevant rates in Megabits per second, Mbps, and the latency 55 of the wireless connection 20 in ms.

The distributed real-time application 4 dynamically adjusts a data rate 400 of the transmitted data packets 40 below a target bitrate 52. The target bitrate 52 is determined by the scheduler 100 as an output bitrate of a virtual queue defined by the scheduler 100 and signaled to the distributed real-time application 4 by the scheduler 100. The target bitrate 52 is exemplarily indirectly signaled by applying a low latency low loss scalable throughput, L4S, algorithm to the virtual queue. Alternatively, the target bitrate 52 may be signaled directly via an application programming interface, API, of the distributed real-time application 4.

The scheduler 100 allocates more spectral resources to the wireless connection 20 than fair spectral resources and determines the target bitrate 52 at an offset 5 above a best effort bitrate 50, the best effort bitrate 50 being determined dependent on the fair allocation of spectral resources and on radio conditions of the wireless connection 20. The offset 5 compensates that the distributed real-time application adjusts the data rate 400 below the signaled target bitrate 52 and, thus, supports the distributed real-time application in fully using the best effort bitrate 50.

The scheduler 100 measures a time average of a deviation of the adjusted data rate 400 from the determined best effort bitrate 50.

The scheduler 100 advantageously measures the time-averaged deviation periodically and/or for predetermined finite time intervals. The time-averaged deviation *δ* is measured by integrating a difference of the adjusted data rate 400 from the determined best effort bitrate 50 over a predetermined time interval *T:* $δ = \frac{1}{T} ∗ \int \left({datarate}_{app}\left(t\right)-{bitrate}_{besteffort}\left(t\right)\right) dt$

The scheduler 100 dynamically adjusts the offset 5 dependent on the measured time-averaged deviation. Particularly, the scheduler 100 gradually reduces the measured time-averaged deviation at least substantially to zero by increasing the offset 5 when the measured time-averaged deviation is negative, and decreases the offset 5 when the time-averaged deviation is positive. The scheduler 100 preferably adjusts the offset 5 faster for a measured time-averaged deviation being absolutely higher and slower for a measured time-averaged deviation being absolutely lower.

When the distributed real-time application 4 starts, the scheduler 100 may assign a priority to the transmitted data packets 40, allocates spectral resources to the wireless connection 20 corresponding to the assigned priority and determine a priority bitrate 51 dependent on the allocated spectral resources and on radio conditions of the wireless connection 20 and an initial offset 5. The initial offset 5 may be calculated as a percentage of an excess of the determined priority bitrate 51 over the determined best effort bitrate 50 to result in an initially negative time-averaged deviation, e.g., the percentage being in a range from 5% to 10% of the excess. The scheduler 100 may assign an absolute priority or a relative priority to the transmitted data packets 40.

Alternatively, the initial offset 5 may be determined to be a stored averaged offset associated with the distributed real-time application 4.

The scheduler 100 advantageously stores each offset 5 for a storing time, calculates an average of the stored offsets 5 and adjusts the offset 5 faster when a deviation of a current offset 5 from the averaged offset is smaller and adjusts the offset 5 slower when a deviation of a current offset 5 from the averaged offset is bigger.

The scheduler 100 preferably allocates spectral resources allocated to the wireless connection 20 but not used by the distributed real-time application 4 to a different wireless connection 20 provided by the access point 10. The allocated but not used spectral resources correspond to a distributable headroom 53 when the determined best effort bitrate 50 is constant.

As can be seen from the graph 6, the data rate 400 substantially follows the best effort bitrate 50. When the best effort bitrate 50 is constant the adjusted data rate 400 substantially equals the best effort bitrate 50. When the best effort bitrate 50 varies over time, the adjusted data rate 400 varies with a transient response temporarily differing from the best effort bitrate 50 and delaying the data rate 400 substantially equaling the best effort bitrate 50. The transient response depends on a rate adaptation algorithm of the distributed real-time application 4. During the transient response, the data rate 400 may temporarily exceed the best effort bitrate 50 or fall below the best effort bitrate 50.

As a result, a latency 55 of the wireless connection 20 is very small and constant, i.e., the distributed real-time application 4 reliably benefits from a very low jitter. Moreover, the distributed real-time application 4 fully uses the determined best effort bitrate 50 most of the time without substantially disadvantaging further simultaneous wireless connections provided by the access point 10.

Fig. 3 schematically shows a graph 7 displaying a time behavior of relevant rates, i.e., a data rate 400 of the distributed real-time application 4 and bitrates 50, 51, 52 of the wireless connection 20, and a latency 55 of the wireless connection 20 controlled by the scheduler 100 shown in fig. 1 carrying out a method according to a second embodiment of the invention. An abscissa 70 of the graph 7 indicates a time in seconds. An ordinate 71 of the graph 7 indicates values of both the relevant rates in Megabits per second, Mbps, and the latency 55 of the wireless connection 20 in ms.

The distributed real-time application 4 may additionally transmit a functional minimum data rate 42 of the distributed real-time application 4 to the scheduler 100. The scheduler 100 may then determine the target bitrate 52 to be at least the transmitted functional minimum data rate 42 increased by the offset 5, at least temporarily for a tolerance time interval.

As can be seen from the graph 7, the data rate 400 does not follow the best effort bitrate 50 during a dent of the best effort bitrate 50. Instead, the data rate 400 is adjusted to substantially equal the functional minimum data rate 42.

As a result, the distributed real-time application 4 continues to function during the dent of the best effort bitrate 50 although the best effort bitrate 50 falls below the functional minimum data rate 42. However, further simultaneous wireless connections provided by the access point 10 are substantially disadvantaged during the dent as the distributed real-time application uses a bitrate substantially higher than the best effort bitrate 50, i.e., the remaining distributable headroom 53 is much smaller during the dent. Thus, the scheduler 100 may support the functional minimum data rate 42 temporarily for the tolerance time interval, i.e., only for a limited time and then adequately reduce the target bitrate 52.

### Reference Numerals

- 1: radio access network
- 10: access point
- 100: scheduler
- 101: antenna
- 11: edge data center
- 12: backbone
- 2: terminal device
- 20: wireless connection
- 3: internet
- 4: distributed real-time application
- 40: data packet
- 400: data rate
- 42: functional minimum data rate
- 5: offset
- 50: best effort bitrate
- 51: priority bitrate
- 52: target bitrate
- 53: headroom
- 54: virtual priority gain
- 55: latency
- 6: graph
- 60: abscissa
- 61: ordinate
- 7: graph
- 70: abscissa
- 71: ordinate

## Claims

1. A method for operating a scheduler (100) of an access point (10) of a radio access network, RAN, (1), wherein
- the scheduler (100) of the access point (10) of the RAN (1) allocates spectral resources to a wireless connection (20) provided by the access point (10) and forwards data packets (40) transmitted by a distributed real-time application (4) via the wireless connection (20);
- the distributed real-time application (4) dynamically adjusts a data rate (400) of the transmitted data packets (40) below a target bitrate (52) signaled to the distributed real-time application (4) by the scheduler (100), the target bitrate being determined by the scheduler (100) as an output bitrate of a virtual queue defined by the scheduler (100);
- the scheduler (100) allocates more spectral resources to the wireless connection (20) than fair spectral resources, determines the target bitrate (52) at an offset (5) above a best effort bitrate (50), the best effort bitrate (50) being determined dependent on the fair allocation of spectral resources and on radio conditions of the wireless connection (20), measures a time average of a deviation of the adjusted data rate (400) from the determined best effort bitrate (50), the time-averaged deviation being measured by integrating a difference of the adjusted data rate from the determined best effort bitrate over a predetermined time interval, and dynamically adjusts the offset (5) dependent on the measured time-averaged deviation.

2. The method according to claim 1, wherein the scheduler (100) gradually reduces the measured time-averaged deviation at least substantially to zero by increasing the offset (5) when the measured time-averaged deviation is negative, and by decreasing the offset (5) when the time-averaged deviation is positive.

3. The method according to claim 1 or 2, wherein the scheduler (100) adjusts the offset (5) faster for a measured time-averaged deviation being absolutely higher and slower for a measured time-averaged deviation being absolutely lower.

4. The method according to one of claims 1 to 3, wherein the scheduler (100) measures the time-averaged deviation periodically and/or for predetermined finite time intervals.

5. The method according to one of claims 1 or 4, wherein the scheduler (100) assigns a priority to the transmitted data packets (40), allocates spectral resources to the wireless connection (20) corresponding to the assigned priority and determines a priority bitrate (51) dependent on the allocated spectral resources and on radio conditions of the wireless connection (20) and an initial offset (5) when the distributed real-time application (4) starts, the initial offset (5) being calculated as a percentage of an excess of the determined priority bitrate (51) over the determined best effort bitrate (50) to result in an initially negative time-averaged deviation.

6. The method according to claim 5, wherein the scheduler (100) assigns an absolute priority or a relative priority to the transmitted data packets (40).

7. The method according to one of claims 1 or 6, wherein the scheduler (100) determines an initial offset (5) to be a stored averaged offset associated with the distributed real-time application (4) when the distributed real-time application (4) starts.

8. The method according to one of claims 1 to 7, wherein the distributed real-time application (4) transmits a functional minimum data rate (42) of the distributed real-time application (4) to the scheduler (100) and the scheduler (100) determines the target bitrate (52) to be at least the transmitted functional minimum data rate (42) increased by the offset (5).

9. The method according to claim 8, wherein the scheduler (100) determines the target bitrate (52) to be at least the transmitted functional minimum data rate (42) increased by the offset (5) temporarily for a tolerance time interval.

10. The method according to one of claims 1 to 9, wherein the target bitrate (52) is signaled indirectly by applying a low latency low loss scalable throughput, L4S, algorithm to the virtual queue or directly via an application programming interface, API, of the distributed real-time application (4).

11. The method according to one of claims 1 to 10, wherein the scheduler (100) stores each offset (5) for a storing time, calculates an average of the stored offsets (5) and adjusts the offset (5) faster when a deviation of a current offset (5) from the averaged offset is smaller and adjusts the offset (5) slower when a deviation of a current offset (5) from the averaged offset is bigger.

12. The method according to one of claims 1 to 11, wherein the scheduler (100) allocates spectral resources allocated to the wireless connection (20) but not used by the distributed real-time application (4) to a different wireless connection (20) provided by the access point (10).

13. The method according to one of claims 1 to 12, wherein a base transceiver station, BTS, of a cellular network as the RAN (1) provides the wireless connection (20) as the access point (10).

14. An access point for a radio access network, RAN, (1), comprising a computing device configured for carrying out a method according to one of claims 1 to 13 as the scheduler (100).

15. A computer program product, comprising a digital storage medium storing a program code, the program code causing a computing device to carrying out a method according to one of claims 1 to 13 as the scheduler (100) when being executed by a processor of the computing device.

## Patentansprüche

1. Verfahren zum Betreiben eines Schedulers (100) eines Zugangspunkts (10) eines Funkzugangsnetzes, RAN, (1), wobei
- der Scheduler (100) des Zugangspunkts (10) des RAN (1) einer von dem Zugangspunkt (10) bereitgestellten drahtlosen Verbindung (20) Spektralressourcen zuweist und Datenpakete (40) weiterleitet, die von einer verteilten Echtzeitanwendung (4) über die drahtlose Verbindung (20) übertragen werden;
- die verteilte Echtzeitanwendung (4) eine Datenrate (400) der übertragenen Datenpakete (40) dynamisch unterhalb einer der verteilten Echtzeitanwendung (4) von dem Scheduler (100) signalisierten Zielbitrate (52) anpasst, wobei die Zielbitrate von dem Scheduler (100) als eine Ausgangsbitrate einer von dem Scheduler (100) definierten virtuellen Warteschlange bestimmt wird;
- der Scheduler (100) der drahtlosen Verbindung (20) mehr Spektralressourcen als faire Spektralressourcen zuweist, die Zielbitrate (52) bei einem Offset (5) oberhalb einer Best-Effort-Bitrate (50) bestimmt, wobei die Best-Effort-Bitrate (50) in Abhängigkeit von der fairen Zuweisung von Spektralressourcen und von den Funkbedingungen der drahtlosen Verbindung (20) bestimmt wird, einen Zeitmittelwert einer Abweichung der angepassten Datenrate (400) von der bestimmten Best-Effort-Bitrate (50) misst, wobei die zeitgemittelte Abweichung durch Integrieren einer Differenz zwischen der angepassten Datenrate und der bestimmten Best-Effort-Bitrate über ein vorbestimmtes Zeitintervall gemessen wird, und den Offset (5) in Abhängigkeit von der gemessenen zeitgemittelten Abweichung dynamisch anpasst.

2. Verfahren nach Anspruch 1, wobei der Scheduler (100) die gemessene zeitgemittelte Abweichung zumindest im Wesentlichen schrittweise auf null reduziert, indem er den Offset (5) erhöht, wenn die gemessene zeitgemittelte Abweichung negativ ist, und den Offset (5) verringert, wenn die zeitgemittelte Abweichung positiv ist.

3. Verfahren nach Anspruch 1 oder 2, wobei der Scheduler (100) den Offset (5) bei einer betragsmäßig höheren gemessenen zeitgemittelten Abweichung schneller und bei einer betragsmäßig niedrigeren gemessenen zeitgemittelten Abweichung langsamer anpasst.

4. Verfahren nach einem der Ansprüche 1 bis 3, wobei der Scheduler (100) die zeitgemittelte Abweichung periodisch und/oder für vorbestimmte endliche Zeitintervalle misst.

5. Verfahren nach einem der Ansprüche 1 oder 4, wobei der Scheduler (100) den übertragenen Datenpaketen (40) eine Priorität zuweist, der drahtlosen Verbindung (20) entsprechend der zugewiesenen Priorität Spektralressourcen zuweist und eine Prioritätsbitrate (51) in Abhängigkeit von den zugewiesenen Spektralressourcen und von den Funkbedingungen der drahtlosen Verbindung (20) sowie einen Anfangsoffset (5) bestimmt, wenn die verteilte Echtzeitanwendung (4) startet, wobei der Anfangsoffset (5) als Prozentsatz eines Überschusses der bestimmten Prioritätsbitrate (51) über die bestimmte Best-Effort-Bitrate (50) berechnet wird, um eine anfänglich negative zeitgemittelte Abweichung zu ergeben.

6. Verfahren nach Anspruch 5, wobei der Scheduler (100) den übertragenen Datenpaketen (40) eine absolute Priorität oder eine relative Priorität zuweist.

7. Verfahren nach einem der Ansprüche 1 oder 6, wobei der Scheduler (100) einen Anfangsoffset (5) als einen gespeicherten gemittelten Offset, der der verteilten Echtzeitanwendung (4) zugeordnet ist, bestimmt wenn die verteilte Echtzeitanwendung (4) startet.

8. Verfahren nach einem der Ansprüche 1 bis 7, wobei die verteilte Echtzeitanwendung (4) eine funktionale Mindestdatenrate (42) der verteilten Echtzeitanwendung (4) an den Scheduler (100) überträgt und der Scheduler (100) die Zielbitrate (52) so bestimmt, dass sie mindestens der um den Offset (5) erhöhten übertragenen funktionalen Mindestdatenrate (42) entspricht.

9. Verfahren nach Anspruch 8, wobei der Scheduler (100) die Zielbitrate (52) vorübergehend für ein Toleranzzeitintervall so bestimmt, dass sie mindestens der um den Offset (5) erhöhten übertragenen funktionalen Mindestdatenrate (42) entspricht.

10. Verfahren nach einem der Ansprüche 1 bis 9, wobei die Zielbitrate (52) indirekt durch Anwenden eines Low-Latency-Low-Loss-Scalable-Throughput-, L4S-, Algorithmus auf die virtuelle Warteschlange oder direkt über eine Anwendungsprogrammierschnittstelle, API, der verteilten Echtzeitanwendung (4) signalisiert wird.

11. Verfahren nach einem der Ansprüche 1 bis 10, wobei der Scheduler (100) jeden Offset (5) für eine Speicherdauer speichert, einen Mittelwert der gespeicherten Offsets (5) berechnet und den Offset (5) schneller anpasst, wenn eine Abweichung eines aktuellen Offsets (5) von dem gemittelten Offset kleiner ist, und den Offset (5) langsamer anpasst, wenn eine Abweichung eines aktuellen Offsets (5) von dem gemittelten Offset größer ist.

12. Verfahren nach einem der Ansprüche 1 bis 11, wobei der Scheduler (100) der drahtlosen Verbindung (20) zugewiesene, aber von der verteilten Echtzeitanwendung (4) nicht genutzte Spektralressourcen einer anderen von dem Zugangspunkt (10) bereitgestellten drahtlosen Verbindung (20) zuweist.

13. Verfahren nach einem der Ansprüche 1 bis 12, wobei eine Basisstation, BTS, eines Mobilfunknetzes als RAN (1) die drahtlose Verbindung (20) als den Zugangspunkt (10) bereitstellt.

14. Zugangspunkt für ein Funkzugangsnetz, RAN, (1), umfassend eine Rechenvorrichtung, die dazu eingerichtet ist, ein Verfahren nach einem der Ansprüche 1 bis 13 als der Scheduler (100) auszuführen.

15. Computerprogrammprodukt, umfassend ein digitales Speichermedium, auf dem ein Programmcode gespeichert ist, wobei der Programmcode eine Rechenvorrichtung veranlasst, ein Verfahren nach einem der Ansprüche 1 bis 13 als der Scheduler (100) auszuführen, wenn er von einem Prozessor der Rechenvorrichtung ausgeführt wird.

## Revendications

1. Procédé permettant de faire fonctionner un planificateur (100) d'un point d'accès (10) d'un réseau d'accès radio (RAN) (1), dans lequel
- le planificateur (100) du point d'accès (10) du RAN (1) attribue des ressources spectrales à une connexion sans fil (20) fournie par le point d'accès (10) et retransmet des paquets de données (40) transmis par une application distribuée en temps réel (4) via la connexion sans fil (20);
- l'application distribuée en temps réel (4) ajuste dynamiquement un débit de données (400) des paquets de données (40) transmis à une valeur inférieure à un débit binaire cible (52) signalé à l'application distribuée en temps réel (4) par le planificateur (100), le débit binaire cible étant déterminé par le planificateur (100) en tant que débit binaire de sortie d'une file d'attente virtuelle définie par le planificateur (100);
- le planificateur (100) attribue à la connexion sans fil (20) davantage de ressources spectrales que des ressources spectrales équitables, détermine le débit binaire cible (52) à un décalage (5) supérieur à un débit binaire best effort (50), ledit débit binaire best effort (50) étant déterminé en fonction de l'attribution équitable des ressources spectrales et des conditions radio de la connexion sans fil (20), mesure une moyenne temporelle d'un écart entre le débit de données (400) ajusté et le débit binaire best effort (50) déterminé, l'écart moyen temporel étant mesuré en intégrant une différence entre le débit de données ajusté et le débit binaire best effort déterminé pendant un intervalle de temps prédéterminé, et ajuste dynamiquement le décalage (5) en fonction de l'écart moyen temporel mesuré.

2. Procédé selon la revendication 1, dans lequel le planificateur (100) réduit progressivement l'écart moyen temporel mesuré au moins essentiellement à zéro, en augmentant le décalage (5) lorsque l'écart moyen temporel mesuré est négatif et en diminuant le décalage (5) lorsque ledit écart moyen temporel mesuré est positif.

3. Procédé selon la revendication 1 ou 2, dans lequel le planificateur (100) ajuste le décalage (5) plus rapidement lorsque l'écart moyen temporel mesuré est supérieur en valeur absolue et plus lentement lorsque ledit écart moyen temporel mesuré est inférieur en valeur absolue.

4. Procédé selon l'une des revendications 1 à 3, dans lequel le planificateur (100) mesure l'écart moyen temporel de manière périodique et/ou pour des intervalles de temps finis prédéterminés.

5. Procédé selon l'une des revendications 1 ou 4, dans lequel le planificateur (100) donne une priorité aux paquets de données (40) transmis, attribue des ressources spectrales à la connexion sans fil (20) en fonction de la priorité donnée et détermine un débit binaire prioritaire (51) en fonction des ressources spectrales attribuées et des conditions radio de la connexion sans fil (20) ainsi qu'un décalage (5) initial au démarrage de l'application distribuée en temps réel (4), le décalage (5) initial étant calculé comme un pourcentage d'un excédent du débit binaire prioritaire (51) déterminé par rapport au débit binaire best effort (50) déterminé de manière à obtenir un écart moyen temporel initialement négatif.

6. Procédé selon la revendication 5, dans lequel le planificateur (100) attribue une priorité absolue ou une priorité relative aux paquets de données (40) transmis.

7. Procédé selon l'une des revendications 1 ou 6, dans lequel le planificateur (100) détermine un décalage (5) initial comme étant un décalage moyen enregistré associé à l'application distribuée en temps réel (4) au moment du démarrage de l'application distribuée en temps réel (4).

8. Procédé selon l'une des revendications 1 à 7, dans lequel l'application distribuée en temps réel (4) transmet au planificateur (100) un débit de données minimal fonctionnel (42) de l'application distribuée en temps réel (4), et le planificateur (100) détermine le débit binaire cible (52) de manière à ce qu'il soit au moins égal au débit de données minimal fonctionnel (42) transmis, majoré du décalage (5).

9. Procédé selon la revendication 8, dans lequel le planificateur (100) détermine que le débit binaire cible (52) doit être au moins égal au débit de données minimal fonctionnel (42) transmis majoré du décalage (5) temporairement pendant un intervalle de temps de tolérance.

10. Procédé selon l'une des revendications 1 à 9, dans lequel le débit binaire cible (52) est signalé indirectement en appliquant un algorithme L4S (débit évolutif à faible latence et à faibles pertes) à la file d'attente virtuelle, ou directement via une interface de programmation d'application (API) de l'application distribuée en temps réel (4).

11. Procédé selon l'une des revendications 1 à 10, dans lequel le planificateur (100) enregistre chaque décalage (5) pendant un temps de stockage, calcule une moyenne des décalages (5) enregistrés et ajuste le décalage (5) plus rapidement lorsque l'écart entre un décalage (5) actuel et le décalage moyen est faible, et ajuste le décalage (5) plus lentement lorsqu'un écart entre un décalage (5) actuel et le décalage moyen est important.

12. Procédé selon l'une des revendications 1 à 11, dans lequel le planificateur (100) attribue des ressources spectrales qui sont attribuées à la connexion sans fil (20) mais qui ne sont pas utilisées par l'application distribuée en temps réel (4) à une autre connexion sans fil (20) fournie par le point d'accès (10).

13. Procédé selon l'une des revendications 1 à 12, dans lequel une station de base (BTS) d'un réseau cellulaire, agissant en tant que le RAN (1), assure la connexion sans fil (20) en tant que le point d'accès (10).

14. Point d'accès pour un réseau d'accès radio (RAN) (1), comprenant un dispositif informatique configuré pour mettre en œuvre un procédé selon l'une des revendications 1 à 13 en tant que le planificateur (100).

15. Produit logiciel, comprenant un support de stockage numérique sur lequel est stocké un code de programme, le code de programme amenant un dispositif informatique à mettre en œuvre un procédé selon l'une des revendications 1 à 13 en tant que le planificateur (100) lorsqu'il est exécuté par un processeur dudit dispositif informatique.
